# EUROPEAN PATENT APPLICATION

(11) **EP 3 364 272 A1**
(43) Date of publication of application: **22.08.2018**
(21) Application number: 18153234.2
(22) Date of filing: 24.01.2018
(51) Int. Cl.: G06F 3/01

(54) **AUTOMATIC LOCALIZED HAPTICS GENERATION SYSTEM**

(30) Priority: 16.02.2017 US 201715434752
(71) Applicant: Immersion Corporation, San Jose, CA 95134 (US)
(72) Inventor: WU, Liwen, Verdun, Québec H4H 1V6 (CA); SABOUNE, Jamal, Montreal, Québec H2T 1R2 (CA)
(74) Representative: Hofstetter, Schurack & Partner

(57) **Abstract**

A method and system of dynamically generating localized haptic effects that includes receiving video data and detecting a video event within that video data. Information is collected including at least a position and type of the detected video event. The collection of information also includes at least a position and orientation of a user's avatar in the video data. The locations of a first and second haptic output device are determined. Haptic effects are dynamically generated for the first and second haptic output devices, wherein the dynamic generation of the haptic effects are based on the locations of the first and second haptic output devices, the position and orientation of the user's avatar in relationship to the position and the type of video event.

## Description

### FIELD

One embodiment is directed generally to a haptic system, and in particular, to an automatic localized haptics generation system.

### BACKGROUND INFORMATION

Haptics is a tactile and force feedback technology that takes advantage of the sense of touch of a user by applying haptic feedback effects (e.g., "haptic effects"), such as forces, vibrations, and motions, to the user. Devices, such as mobile devices, touchscreen devices, and personal computers, can be configured to generate haptic effects. In general, calls to embedded hardware capable of generating haptic effects (such as actuators) can be programmed within an operating system ("OS") of the device. These calls specify which haptic effect to play. For example, when a user interacts with the device using, for example, a button, touchscreen, lever, joystick, wheel, or some other control, the OS of the device can send a play command through control circuitry to the embedded hardware. The embedded hardware then produces the appropriate haptic effect.

### SUMMARY

In an embodiment of the present disclosure, a method of dynamically generating localized haptic effects is presented. The method includes receiving video data and detecting a video event within that video data. The method continues by collecting information including at least a position and type of the detected video event. The method also includes collecting information containing at least a position and orientation of a user's avatar in the video data. The locations of a first and second haptic output device are determined. The method then dynamically generates a first haptic effect for the first haptic output device and a second haptic effect for the second haptic output device, wherein the dynamic generation of the first and second haptic effects are based on the locations of the first and second haptic output devices, the position and orientation of the user's avatar in relationship to the position and the type of video event.

### BRIEF DESCRIPTION OF THE DRAWINGS

The accompanying drawings, which are incorporated herein and form part of the specification, illustrate the present invention and, together with the description, further serve to explain the principles of the present invention and to enable a person skilled in the relevant art(s) to make and use the present invention.

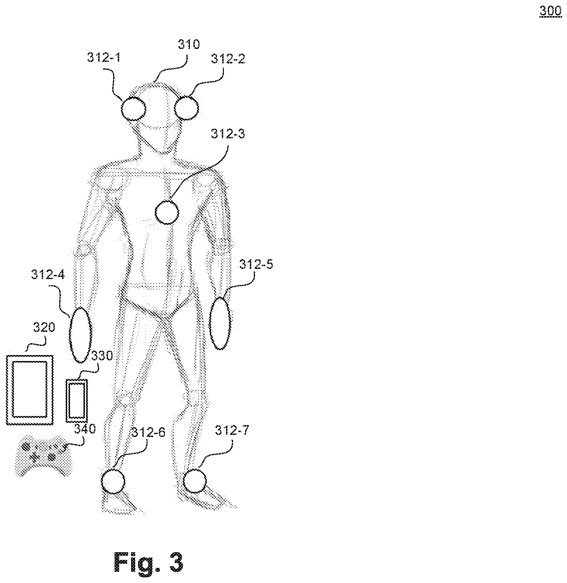

Additionally, the left most digit of a reference number identifies the drawing in which the reference number first appears (e.g., a reference number '310' indicates that the element so numbered is first labeled or first appears in FIG. 3). Additionally, elements which have the same reference number, followed by a different letter of the alphabet or other distinctive marking (e.g., an apostrophe), indicate elements which are the same in structure, operation, or form but may be identified as being in different locations in space or recurring at different points in time.
Fig. 1 illustrates a block diagram of a computer/server system, according to an embodiment of the present disclosure.
Fig. 2 is a block diagram of a localized haptic effect generation system that detects events, collects event and user data, determines the location of haptic output devices, and dynamically generates localized haptics, according to an embodiment of the present disclosure.
Fig. 3 is a pictorial illustration of haptic output device placement on a user, according to an embodiment of the present disclosure.
Fig. 4 is an illustration of a video event and an avatar in a three-dimensional game space where multiple coordinates of the avatar are mapped to real world actuation points on the user, according to an embodiment of the present disclosure.
Fig. 5 is a pictorial illustration of multiple orientations of a user, or the user's avatar in relationship to a video event, according to an embodiment of the present disclosure.
Fig. 6 is an illustration of a video event and an avatar, in a rotated position compared to Fig. 4, in a three-dimensional game space where multiple coordinates of the avatar are mapped to real world actuation points on the user, according to an embodiment of the present disclosure.
Fig. 7 is a flow diagram of the functionality of the system of Fig. 1 when automatically generating a localized haptics, according to an embodiment of the present disclosure.

### DETAILED DESCRIPTION

One embodiment provides surround haptic playback in a three-dimensional virtual reality ("VR") environment. In one embodiment, multiple haptic output devices are implemented in conjunction with a three-dimensional VR video system to customize a haptic experience based on a user's avatar's position and orientation within the video. In one embodiment, video data is received and a video event within the video data is detected. Based on the avatar's position, the position of the multiple haptic output devices, the type of detected video event, and the position and orientation to the video event, dynamic localized haptics are generated for each haptic output device.

While embodiments described herein are illustrative embodiments for particular applications, it should be understood that the invention is not limited thereto. Those skilled in the art with access to the teachings provided herein will recognize additional modifications, applications, and embodiments within the scope thereof and additional fields in which the invention would be of significant utility.

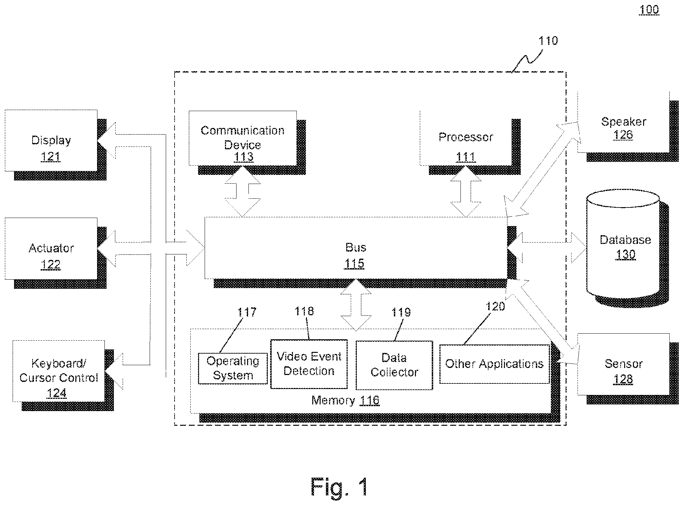

Fig. 1 illustrates a block diagram of a system 100, according to an embodiment. In one embodiment, system 100 is part of a device, and system 100 provides an automatic haptic effect based on a detected video event for the device. In another embodiment, system 100 is separate from the device, and remotely provides the automatic haptic effect based on a detected video event for the device. Although shown as a single system, the functionality of system 100 can be implemented as a distributed system. System 100 includes a bus 115 or other communication mechanism for communicating information, and a processor 111 coupled to bus 115 for processing information. Processor 111 may be any type of general or specific purpose processor. System 100 further includes a memory 116 for storing information and instructions to be executed by processor 111. Memory 116 can be comprised of any combination of random access memory ("RAM"), read only memory ("ROM"), static storage such as a magnetic or optical disk, or any other type of computer-readable medium.

A computer-readable medium may be any available transitory and non-transitory medium that can be accessed by processor 111 and may include both a volatile and nonvolatile medium, a removable and non-removable medium, a communication medium, and a storage medium. A communication medium may include computer readable instructions, data structures, program modules or other data in a modulated data signal such as a carrier wave or other transport mechanism, and may include any other form of an information delivery medium known in the art. A storage medium may include RAM, flash memory, ROM, erasable programmable read-only memory ("EPROM"), electrically erasable programmable read-only memory ("EEPROM"), registers, hard disk, a removable disk, a compact disk read-only memory ("CD-ROM"), or any other form of a storage medium known in the art.

In one embodiment, memory 116 stores software modules that provide functionality when executed by processor 111. The modules include an operating system 117 that provides operating system functionality for system 100, as well as the rest of a device in an embodiment. The modules further include a video event detection module 118 that automatically detects a video event, as disclosed in more detail below. In certain embodiments, video event detection module 118 can include multiple modules, where each individual module provides specific individual functionality for detecting a video event. For example, video event detection module 118 may include a detection module that detects events based on color and motion analysis, on visual odometry, or on sport sensors (*e.g*., wearable heart rate sensor, radar speed detector, etc.) or any other external sensors. Data collector module 119 is configured to collect data associated with a detected video event including information concerning a user's avatar within the video data. The collected data regarding the user includes the avatar's position, facing direction, head rotation and any other actions. The collected data can also include data associated with the user through the use of an external sensor, which can be used independently or in conjunction with the data associated with the avatar. The user, or avatar's, action could be analyzed using visual odometry technology, or external sensors. The collected data regarding the detected video event can include the capture of the target event, the event start and stop time, and the events position/coordinates in three-dimensional space. The position/coordinates can also be expressed in relative terms to the user or user's avatar.

System 100 will typically also include one or more additional application modules 120 to include additional functionality, such as the "TouchSense" application by Immersion Corp., which integrates haptic effects with audio/visual input.

System 100, in embodiments that transmit and/or receive data from remote sources, further includes a communication device 113, such as a network interface card, to provide mobile wireless network communication, such as infrared, radio, Wi-Fi, or cellular network communication. In other embodiments, communication device 113 provides a wired network connection, such as an Ethernet connection or a modem.

Processor 111 is further coupled via bus 115 to a display 121, such as a Liquid Crystal Display ("LCD"), for displaying a graphical representation or user interface to a user. Display 121 may be a touch-sensitive input device, such as a touchscreen, configured to send and receive signals from processor 111, and may be a multi-touch touchscreen. Processor 111 may be further coupled to a keyboard or cursor control 124 that allows a user to interact with system 100, such as a mouse or a stylus.

System 100, in one embodiment, further includes an actuator 122. Processor 111 may transmit a haptic signal associated with a generated haptic effect to actuator 122, which in turn outputs haptic effects such as vibrotactile haptic effects, electrostatic friction haptic effects, or deformation haptic effects. Actuator 122 includes an actuator drive circuit. Actuator 122 may be, for example, an electric motor, an electro-magnetic actuator, a voice coil, a shape memory alloy, an electroactive polymer, a solenoid, an eccentric rotating mass motor ("ERM"), a linear resonant actuator ("LRA"), a piezoelectric actuator, a high bandwidth actuator, an electroactive polymer ("EAP") actuator, an electrostatic friction display, or an ultrasonic vibration generator. In alternate embodiments, system 100 can include one or more additional actuators, in addition to actuator 122 (not illustrated in Fig. 1). Actuator 122 is an example of a haptic output device, where a haptic output device is a device configured to output haptic effects, such as vibrotactile haptic effects, electrostatic friction haptic effects, or deformation haptic effects, in response to a drive signal. In alternate embodiments, actuator 122 can be replaced by some other type of haptic output device. Further, in other alternate embodiments, system 100 may not include actuator 122, a separate device from system 100 includes an actuator, or other haptic output device, that generates the haptic effects, and system 100 sends generated haptic effect signals to that device through communication device 113.

System 100 can further be operatively coupled to a database 130, where database 130 can be configured to store data used by memory 116. Database 130 can be an operational database, an analytical database, a data warehouse, a distributed database, an end-user database, an external database, a navigational database, an in-memory database, a document-oriented database, a real-time database, a relational database, an object-oriented database, or any other database known in the art.

In one embodiment, system 100 further includes one or more speakers 126. Processor 111 may transmit an audio signal to speaker 126, which in turn outputs audio effects. Speaker 126 may be, for example, a dynamic loudspeaker, an electrodynamic loudspeaker, a piezoelectric loudspeaker, a magnetostrictive loudspeaker, an electrostatic loudspeaker, a ribbon and planar magnetic loudspeaker, a bending wave loudspeaker, a flat panel loudspeaker, a heil air motion transducer, a plasma arc speaker, and a digital loudspeaker.

System 100, in one embodiment, further includes a sensor 128. Sensor 128 can be configured to detect a form of energy, or other physical property, such as, but not limited to, acceleration, bio signals, distance, flow, force/pressure/strain/bend, humidity, linear position, orientation/inclination, radio frequency, rotary position, rotary velocity, manipulation of a switch, temperature, vibration, or visible light intensity. Sensor 128 can further be configured to convert the detected energy, or other physical property, into an electrical signal, or any signal that represents virtual sensor information. Sensor 128 can be any device, such as, but not limited to, an accelerometer, an electrocardiogram, an electroencephalogram, an electromyography, an electrooculogram, an electropalatograph, a galvanic skin response sensor, a capacitive sensor, a hall effect sensor, an infrared sensor, an ultrasonic sensor, a pressure sensor, a fiber optic sensor, a flexion sensor (or bend sensor), a force-sensitive resistor, a load cell, a LuSense CPS2 155, a miniature pressure transducer, a piezo sensor, a strain gage, a hygrometer, a linear position touch sensor, a linear potentiometer (or slider), a linear variable differential transformer, a compass, an inclinometer, a magnetic tag (or radio frequency identification tag), a rotary encoder, a rotary potentiometer, a gyroscope, an on-off switch, a temperature sensor (such as a thermometer, thermocouple, resistance temperature detector, thermistor, or temperature-transducing integrated circuit), microphone, photometer, altimeter, bio monitor, or a light-dependent resistor.

In general, automatic haptic conversion algorithms that generate haptic effects from sensory multimedia data, including audio and/or video data, lack a customized or tailored effect for a particular event. Embodiments presented in this disclosure inject the ability to dynamically tailor a haptic effect for a specific video event automatically, using a variety of detection and associated algorithm techniques.

Generally, some known systems may provide haptic effects in a virtual, or augmented, reality environment. Virtual reality refers to using software to generate realistic images, sounds, and other sensations that replicate a real environment (or create an imaginary setting) and simulate a user's physical "presence" in this environment by enabling the user to interact with this space and any objects depicted therein using specialized display screens, projectors, or other devices. Virtual reality may be provided by systems such as Oculus Rift from Facebook, Project Morpheus from Sony, and Gear VR from Samsung. Augmented Reality refers to a live direct or indirect view of a physical real world environment whose elements are augmented (or supplemented) by computer-generated sensory input such as sound, video, graphics, GPS data, etc. Augmented Reality may be provided by smart glasses such as Google Glass from Google, Daqri Smart Helmet from Daqri, or Moverio from Epson. In addition, Mixed Reality (also referred to as hybrid reality) refers to the merging of real and virtual worlds to produce new environments and visualizations where physical and digital virtual objects co-exist and interact in real time. Unlike Augmented Reality, the virtual objects in Mixed Reality interact with real objects and are not merely added as a virtual overlay on top of the real objects. Mixed Reality may be provided by systems such as HoloLens from Microsoft.

Some known systems provide haptic feedback to a user of virtual, augmented, or mixed reality system via pre-configured controllers. However, the haptic feedback provided by each of these known systems is limited to and constrained by the pre-configured controllers that come with each system. Further, although some of these controllers such as "Vive" and "Touch" use the same type of actuator, they each implement different proprietary application programming interface ("API") methods for calling a motor and sending voltages to the motor. As a result, the feeling provided by haptic feedback on one device may be different from the feeling provided by haptic feedback on the other device.

In contrast to the known systems, embodiments in the current disclosure allow users to experience haptic feedback added to their user experience so that the users can experience a more realistic surrounded based tactile environment based on their avatar's position in the virtual environment, haptic output device placement on the user, event type and event position. Further, in general, automatic haptic conversion algorithms that generate haptic effects from sensory multimedia data, including audio and/or video data, lack a customized or tailored three-dimensional effect for a particular event based on position and orientation of the user in relationship to the video event. Embodiments presented in this disclosure inject the ability to automatically and dynamically tailor haptic effects in a three-dimensional reality for a specific video event.

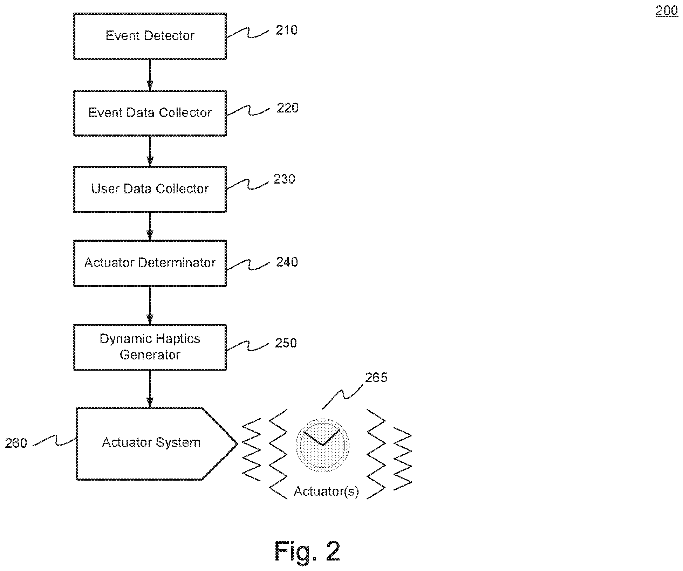

Fig. 2 is a block diagram of a haptic effect generation system 200, according to an embodiment. Haptic effect generation system 200 includes an event detector 210, an event data collector 220, a user data collector 230, an actuator determinator 240, a dynamic haptics generator 250, an actuator system 260 and actuators 265. Portions, or all of Fig. 2, can be implemented by system 100 of Fig.1.

Event detector 210 receives video data. The video data can be a media file, a data stream including video content, or any other type of media content file. However, at a minimum, the video data includes some video content. Once the video data is received, event detector 210 then detects a video event contained within the received video data. Such detection is accomplished by the use of a video processing algorithm to process the video data, including both video and audio. Such algorithms can be based on color and motion analysis, or based on visual odometry, or on sport sensors or any other external sensor that identifies a start time and an end time of video events, also referenced to as target events, within the received video data. Further, event sensing can also be accomplished manually, for example, by human intervention by an operator or curator prior to receipt of the data stream. Automatic detection can also be accomplished using just video data and/or audio data.

Event data collector 220 includes a video processing algorithm that captures and collects data concerning the detected event. Such data includes the three-dimensional position of the event. Alternatively, rather than an absolute position, algorithms within event data collector 220 can determine a relative position, such as distance and angular orientation, between the viewer and the event. Event data can also include any event attribute or other characteristic such as time-stamps, temporal propagation, spatial propagation, time-span, nature of the event, etc. In an embodiment, the viewer is actually the user's avatar in a virtual reality environment.

In another embodiment, the event data parameters can be completed manually, for example by the designer. Such capability enables the possibility to design haptic effects for the event that cannot be seen by the viewer such as an earthquake, or large explosion that occurs out of the viewer's range of site. Further, the event data parameters can also be captured through external sensors. Event data can also be collected through the use of source code and its associated parameters found within a three-dimensional video or game.

After event data is collected, user data collector 230 is used to collect information regarding the user, viewer or player. User data collector 230 collects data including the viewer/player's position, or the position of the viewer/player's avatar in a video. This can include the facing direction, head pose, and the pose of any other part of the player/viewer's body or avatar. In some embodiments the location and orientation of the actual viewer is independent of the location and/or orientation of the avatar. In other embodiments the location and orientation of the avatar is dependent upon that of the viewer in the real world, user data collector 230, in a three-dimensional video, can analyze the viewer's actions using Visual Odometry technology, or external sensors. And, as with event data collector 220, user data collector 230 can gather user data from source code.

Actuator determinator 240 is configured to determine the number, location and types of haptic output devices or actuators. The placement, type and number of devices or actuators determine the quality of localized haptics. The greater the number of devices, the better the sensation of localized haptics by the user. Haptic output devices can be located on the user, such as through the user of wearable technologies, embedded within a handheld controller, or integrated into objects such as a chair or other furniture. In addition, small numbers of actuators are capable of producing reasonable localized haptics by the use of haptic illusion technology.

Dynamic haptics generator 250 dynamically generates haptic effects commands for the haptic output devices based on the outputs of event detector 210, event data collector 220, user data collector 230 and actuator determinator 240. Dynamic haptics generator 250 generates effects based on the target events and/or the actions of the viewer and/or the avatar of the viewer/player. Dynamic haptics generator 250 analyzes the number and position of the available haptic output devices (e.g., actuators) to determine the proper type of dynamic localized haptic effect to be provided to each haptic output device. Further, dynamic haptics generator 250 can dynamically produce the localized haptic effects for each haptic output device in real time. For example, if the user/player and/or avatar of the user/player makes a movement during a detected video event, the localized haptic effect will be modified based on the changing movement. For example, if there is an explosion in front of the avatar, the user would feel a response in the front of their body, and then if the avatar turned to the left the haptic effects would shift to the right side of the user's body.

In another example, Lisa is watching a three-dimensional action movie. She knows the direction and distance of an explosion through the experience of localized haptics, which make her feel as if she is in a real scene. When she changes her point of view in the movie, the localized haptics will change accordingly. In another example, Mike is playing a three-dimensional game. He can approximate how far the monster in the game is behind him or it is on his left/right side through the localized haptics without the need to turn his head. The localized haptics will change automatically when he runs far from or gets closer to the monster, or changes his direction in the game.

Actuator system 260 receives haptic commands, or instructions, from dynamic haptics generator 250 and operates actuators 265 that produce the desired haptic effect. Actuator system 260 also includes one or more drivers.

Fig. 3 is an illustration of a possible placement of haptic output devices on a user in localized haptic system 300, according to an embodiment. Localized haptic system 300 includes haptic output devices and/or sensors on user 310. The placement of haptic output devices, or sensors, is referred to an actuation points. In an embodiment, user 310 illustrates the location of actuation points 312 including 312-1 through 321-7 on user 310's head, chest, left and right hands, and on the left and right feet. Placement is not restricted to any particular locations on user 310 but is only shown for illustrative purposes. In the same manner, actuations points can be on any part of user 310's body.

Each actuation point 312 can include a haptic actuator, as well as functionality to communicate (*e.g.*, wirelessly or through a wire) with actuator determinator 240. Each actuation point 312 also includes electronics and software in order to drive its haptic actuator. The haptic actuator may provide haptic functionality according to any embodiments described herein. For example, the haptic actuator may provide haptic feedback including vibration, deformation, heat, ESF, or any other type of haptic actuation known in the art. Further, one or more other haptic output devices may be implemented to provide additional haptic feedback to user 310. For example, a vibration actuator may be embedded into floor tiles so that it can transmit vibrations to the feet of user 310. As another example, an ultrasound emitter can be embedded in a wall so that it can project haptic effects to user 310. As another example, a peltier cell can be embedded in a physical object (*e.g*., a door handle) in an augmented reality environment so that it can change its temperature when touched by user 310. Alternatively or additionally, a gamepad controller 340, a smartphone 330, a touchpad device 320, or any other device that includes haptic actuators can be used to provide additional haptic effects to user 310.

In an embodiment, once an actuation point 312 is connected to actuator system 260 through wired or wireless communication, it can receive commands for providing haptic effects. It may also communicate with actuator determinator 240 to provide various information, for example, information about its capabilities, its sensor readings, etc.

In an embodiment, actuation points 312 may include different haptic actuator types such as vibration actuators, kinesthetic actuators, combination actuators (one device including more than one actuator type), wearables, projected haptics, etc.

In an embodiment, localized haptic system 300 implements position sensing functionality and tracks the location of actuation points 312 relative to each other as well as in the three-dimensional virtual space. Any known position sensing functionality may be implemented in localized haptic system 300 to track actuation points 312, such as magnetic tracking (measuring the intensity of the magnetic field in various directions), acoustic tracking (measuring the time it takes a known acoustic signal to reach known receivers), inertial tracking (using an accelerometers and gyroscopes), optical tracking (using various cameras to obtain positional information), etc., or any other proximity sensing functionality (detecting the presence of nearby objects without any physical contact). In one embodiment, for example, localized haptic system 300 includes one or more remote sensors such as cameras or depth sensors that implement position and motion tracking functionality and detect the presence of user 310 and or detect various body parts of user 310.

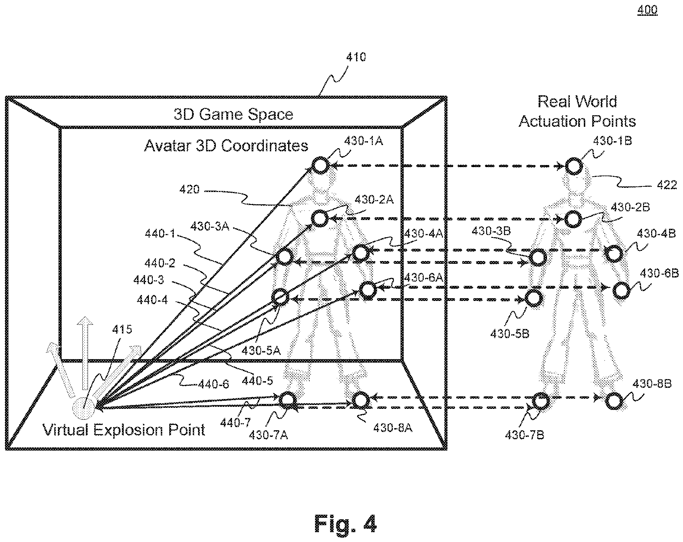

Fig. 4 is a localized haptics generation system 400, according to an embodiment. Localized haptics generation system 400 illustrates a three-dimensional game space 410 that includes a video event, shown as a virtual explosion point 415, an avatar 420 in the three-dimensional game space and a corresponding user 422 in the real world. Avatar 420 is shown with sample actuation points 430-1 A through 430-8A. The avatar's actuation points correspond to real world actuation points on user 422 shown as 430-1 B through 430-8B. Further, vectors 440 indicate the direction and distance from virtual explosion point 415 to each of the avatar actuation points 430-1A - 430-8A.

Localized haptics generation system 400 first detects and identifies the event, shown in Fig. 4 as a virtual explosion occurring at virtual explosion point 415. The system would identify the event and specify the type of event, such as being a collision or an explosion. The system would also identify the magnitude or scope of the event, such as was it a small explosion or a large one. The system would also specify the absolute coordinates of virtual explosion point 415 in the three-dimensional game space 410, or it would calculate the vectors 440-1 - 440-7 to determine a relative distance from virtual explosion point 415 to each actuation point 430-1 A - 430-8A on avatar 420. Vectors 440-1 - 440-7 can also represent intensity from virtual explosion point 415 to each of the actuation points on avatar 420. System 400 can also include a spatial propagation span that defines the intensity of virtual explosion point 415 based on the distance from the event, such as the explosion can be felt by any user in the radius of 100 meters where the intensity of the explosion diminishes exponentially from the center of the explosion. System 400 would also detect a start and stop time for virtual explosion point 415. System 400 can also determine a temporal propagation span, for example where the event is to be felt for a duration of 30 seconds, but the first 5 seconds would be the strongest.

The attributes detected by system 400 can be saved with the video as a separate track or file, or embedded in the three-dimensional video itself.

In an embodiment, system 400 detects event 415 using a computer vision method by analyzing the 360-degree video frames. The detection can be accomplished using one or a multitude of frames with all of the same time stamp, composing the 360-degree view. Such analysis can also be performed using frames with the same time-stamps or a number of successive frames from either a single or multitude of the views comprising the 360-degree video. For this task, common computer vision techniques used in the literature can be used such as a deep learning, pattern matching, optical flow analysis, color and motion features analysis, etc. Once the event is detected, its three-dimensional location can then be estimated using frames related to different views with the same time-stamp, such as stereo vision techniques or multi-angle scene reconstruction. Some characteristics of the event can also be determined by the same approach, such as the size of the event. Such detection by system 400 can run in real time while the user is watching the video, by analyzing the frames displayed to the user in the case of events visible to the user and/or with the use of any other frames available in the three-dimensional video engine. The detection can also be performed offline.

In another embodiment related to three-dimensional VR gaming, the three-dimensional location of an event can be estimated in real time given the game play scenario, such as a player throwing a bomb that explodes at a location related to the speed and strength of the throw. The event's characteristics are thus provided by the game-play engine. System 400 can also provide automatic real-time detection of events in the game using the same computer vision approaches previously described. Further, a game designer can specify a portion of the event's characteristics in advance while others would be estimated by system 400. In addition, an event is not limited to an explosion or collision but rather be any specific interaction the user has with the virtual environment, including something simply touching an object.

System 400 illustrates the viewer's three-dimensional status. User 422's position and orientation in the three-dimensional game space 410 as shown by avatar 420 can be provided directly by the three-dimensional video engine. In another embodiment, user 422's three-dimensional location and orientation in the real world can be accomplished using a multitude of sensors such as accelerometers, gyroscopes, RFIDs, optical tracking, etc. and provide this location to system 400, or to the dynamic haptics generator 250 previously discussed. User 422's status can comprise the three-dimensional position in an absolute or relative referential coordinates and can refer to just the location of user 422 or be more localized by referring to the location and orientation of multiple body parts, or to the location of each actuation point (*e.g*., 430-1 B - 430-8B).

System 400, using a dynamic haptics generator, such as dynamic haptics generator 250, analyzes the detected event's characteristics, the user's status, the available haptic playback devices and generates the appropriate haptic effects accordingly. The haptic effect comprises a combination of one or more haptic cues delivered to the user such as vibrotactile, ESF, Kinesthetic, thermal, ultrasonic, air puffs, deformation, etc. In fact, system 400 can generate an effect with specific characteristics, such as a type of haptic cue, frequency, duration and intensity.

Such effects and characteristics can be based on the following characteristics:
▪ relative proximity of user 422 or avatar 420 and the event estimated using the event's and the user's three-dimensional locations;
   - *e.g*., stronger effect when closer vs. weaker effect when further apart;
▪ field of view of user 422 or avatar 420;
   - *e.g*., facing the event or not estimated using the user's head three-dimensional orientation, for example where user 422 or avatar 420 is looking at the event translated by a stronger effect;
▪ nature of event;
   - *e.g*., explosion versus collision implies different frequencies of vibration, fire event translated through thermal feedback;
▪ magnitude of event;
   - *e.g*., small explosion leads to weaker effect vs. strong explosion;
▪ nature of available haptic playback devices;
   - *e.g*., decides to display thermal feedback if possible or replace it with vibrotactile effect if no thermal pads available;
   - user's body parts position;
      ◆ *e.g.,* if the user's hand is close enough to the three-dimensional fire event the user would feel an effect versus if hand close to body the user would not feel anything;
▪ distribution of the haptic playback devices;
   - *e.g*., event closer to the user's feet so it would be felt only on a device attached to the feet or stronger on this device and weaker on other body part related devices.

In summary, system 400, regarding localized haptics generation combines all the information available in a smart way as to provide the user with the most immersive experience possible. Moreover, the haptic effect can be generated dynamically and updated as to reflect any change in the conditions, such as movement of user 422 or avatar 420 where moving closer to virtual explosion point 415 would result an effect growing in intensity.

In another embodiment, system 400 incorporates the haptic designer's intent into account when generating the haptic effects. For example the designer can express an intent such as "if explosion and user's hand hiding his/her face he/she will feel the haptic effect on his/her hand" or "the user should feel a very distant explosion with high intensity even if he is 100 km far from its center". The designer intent can thus have a priority over the automatic generation described above.

The haptic effects can be generated in real-time and played back along the three-dimensional video or during the game-play and/or partially offline (*i.e.* saved in a timeline /track embedded to the video or separate) as the system can generate partial effects in advance given some known characteristics of the event (*e.g*., type of the effect) and then generate the final effect to be displayed given the user's relative location to the event. For example the system can state that an explosion would be augmented using a vibro-tactile effect of 50 ms with a frequency of 60 Hz which intensity would be determined later in real-time given the user proximity to it in 3D games space 410.

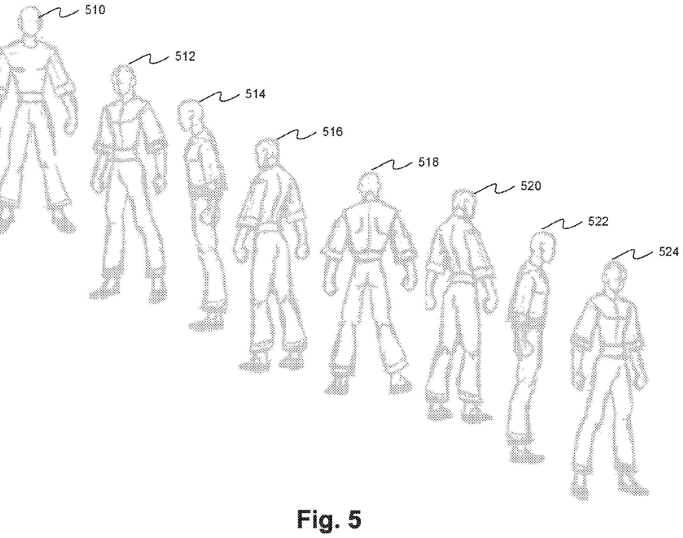

System 400 illustrates user 422 and avatar 420 in the same relative position. As discussed, the positions of user 422 and avatar 420 can be dependent upon each other. However, there does not have to be any such dependency. Fig. 5 illustrates a number of different facing positions in which avatar 420 can be depicted, according to an embodiment. For example, position 510 is the same as that of avatar 420 in Fig. 4. However, positions 512-524 show one-eighth turns going from a front facing position and rotating clockwise in 45-degree increments. The movements of the avatar are not limiting depictions but rather show that the physical position of a user and that of avatar 422 can be independent.

The position of the user versus that of avatar 422 can be viewed in three different scenarios. The first is where the user movement results in avatar 422's movement where avatar 422 represents the user in a virtual reality space. The second scenario is where the movements of avatar 422 and the user are independent, such as avatar 422 turning, but the user does not move. The third scenario is where avatar 422 is not present, such as in a first person view perspective in a virtual reality environment. In this scenario the movement, gesture, and/or sensory information of the user would dictate the user's position in the virtual reality space. Further, the virtual reality environment can "virtually transport" the user and/or avatar (*e.g*., given the gameplay or sequence of animation, etc.) to any three-dimensional location in the virtual reality space without any movement of the user where the location is provided by a virtual reality renderer. In addition, a brain-computer interface ("BCI") can also be used to control avatar 422 by the user.

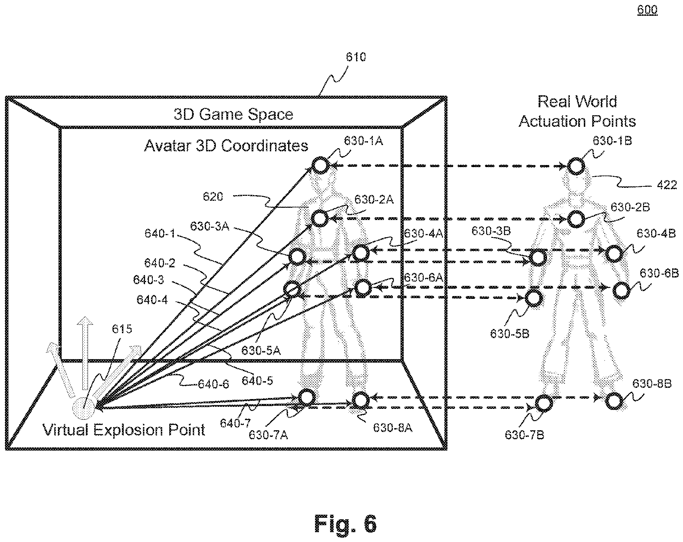

Fig. 6 is a localized haptics generation system 600, according to an embodiment. Localized haptics generation system 600 illustrates a three-dimensional game space 610 that includes a video event, shown as a virtual explosion point 615, an avatar 620 in the three-dimensional game space and a corresponding user 422 (from Fig. 4) in the real world. Avatar 620 is shown with sample actuation points 630-1A through 630-8A. The avatar's actuation points correspond to real world actuation points on user 422 shown as 630-1 B through 630-8B. Further, vectors 640 indicate the direction and distance from virtual event point 615 to each of the avatar actuation points 630-1A - 630-8A.

System 600 is virtually identical to the system 400 described in Fig. 4. However, while user 422 is shown in the same position and orientation as in Fig. 4, avatar 620 has rotated clockwise 45 degrees. In moving, the distances indicated by vectors 640 have changed. For example, actuation points on the right side of avatar 620, *e.g*., 630-3A, 630-5A and 630-7A potentially are further away from event point 615 than the corresponding points in Fig. 4. In the same manner, actuation points on the left side of avatar 620, *e.g*., 630-4A, 630-6A and 630-8A are closer to event point 615 than the corresponding points in Fig. 4. Thus, actuation points that move close would receive a higher intensity haptic than those actuation points that are further. In addition, from a timing standpoint, the actuation points that are closer to event point 615 would feel the haptic effect sooner than the actuation points further from event point 615.

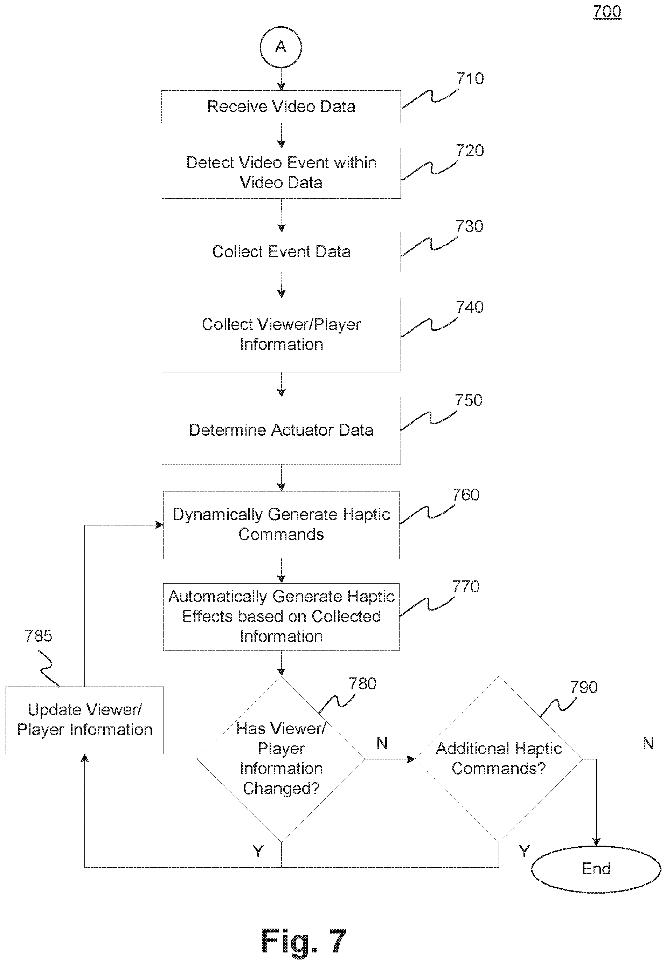

Fig. 7 is a flow diagram 700 with the functionality of system 100 of Fig. 1 for the automatic generation of localized haptics, according to an embodiment. In one embodiment, the functionality of the flow diagram of Fig. 7 is implemented by software stored in memory or other computer readable or tangible medium, and executed by a processor. In other embodiments, the functionality may be performed by hardware (*e.g*., through the use of an application specific integrated circuit ("ASIC"), a programmable gate array ("PGA"), a field programmable gate array ("FPGA"), etc.), or any combination of hardware and software.

Flow diagram 700 starts at 710 where video data is received. As discussed in Fig. 2, the video data can be of any type or protocol, but includes at least video data. In an embodiment, the video data is received through communication device 113 and stored in database 130 in which processor 111 can initiate an analysis of the received video data.

At 720, one or more video events are detected. Such detection could be accomplished using video event detection module 118 that can utilize a variety of event detection algorithms including event detection based on color and motion analysis, or based on visual odometry, or on sport sensors or any other external sensor that identifies a start time and an end time of video events, also referenced to as target events, within the received video data.

At 730, event data is collected. Event data includes a video processing algorithm that captures and collects data concerning the detected event. Such data includes the three-dimensional position of the event. Or, rather than an absolute position, algorithms within event data collector 220 determine a relative position, such as distance and angular orientation, between the viewer and the event. In another embodiment, the event data parameters can be completed manually, for example by the designer. Further, event data can also include any event attribute or other characteristic such as time-stamps, temporal propagation, spatial propagation, time-span, nature of the event, etc.

At 740, user data is collected. Collection of user data can be accomplished through the use of user data collector 230 to collect data including the viewer/player's position, or the position of the viewer/player's avatar in a video. This can include the facing direction, head pose, and the pose of any other part of the player/viewer's body or avatar.

At 750, actuator information is collected and determined. The information can be collected and determined using actuator determinator 240 that includes determining the number, location and types of haptic output devices or actuators. As discussed, haptic output devices can be located on the user, such as through the user of wearable technologies, embedded within a handheld controller, or integrated into objects such as a chair or other furniture. In addition, small numbers of actuators are capable of producing reasonable localized haptics by the use of haptic illusion technology.

At 760, a set of haptic commands are dynamically generated based on the collected video event data, viewer/player information, and actuator data. This dynamic generation can be accomplished through the use of dynamic haptics generator 250 that generates haptic commands based on the target events and/or the actions of the viewer and/or the avatar of the viewer/player. Dynamic haptics generator 250 analyzes the number and position of the available haptic output devices (e.g., actuators) to determine the proper type of dynamic localized haptic effect to be provided to each haptic output device. Further, dynamic haptics generator 250 can dynamically produce the localized haptic effect command for each haptic output device in real time

At 770, the dynamically generated haptic commands are generated. Such haptic effect generation can be accomplished using Actuator system 260 that receives haptic commands, or instructions, from dynamic haptics generator 250 and operates actuators 265 that produce the desired haptic effect.

At 780, any change in the viewer/player information is analyzed. If a change is detected then at 785 the viewer/player information is updated in order to generate updated haptic commands. For example, the haptic effect felt can be generated dynamically and updated as to reflect any change in the conditions, such as movement of user 422 or avatar 420 where moving closer to virtual explosion point 415 would result an effect growing in intensity.

If there is no viewer/player information that has changed in 780, the embodiment looks to 790 to see if there are any additional haptic frames or commands in the video data. The method will continue to loop and process all remaining video events. When complete the process ends.

As discussed, embodiments have been disclosed that include the dynamic generation of localized haptic effects by receiving video data that includes an avatar that corresponds to a user of the video data. A video event within the video data is detected and information regarding the event and the avatar is collected. That information can include a position and type of detected video event, and a position and orientation of the avatar. Haptic effects are then dynamically generated based on the locations haptic output devices on the user, the position and orientation of the avatar in relationship to the position and the type of video event.

Several embodiments are specifically illustrated and/or described herein. However, it will be appreciated that modifications and variations of the disclosed embodiments are covered by the above teachings and within the purview of the appended claims without departing from the spirit and intended scope of the invention.

## Claims

1. A method of producing haptic effects comprising:
receiving video data comprising an avatar having an avatar position and orientation that corresponds to a user of the video data;
detecting a video event having a video position and event type within the video data;
determining a first location of a first haptic output device and a second location of a second haptic output device associated with the user; and
producing a first haptic effect with the first haptic output device and a second haptic effect with the second haptic output device based on the event type, first location and the second location, and the avatar position and orientation in relationship to the video position.

2. The method of claim 1, wherein detecting the video event comprises automatically generating a start time, an end time and a three-dimensional position of the video event.

3. The method of claim 2, wherein the three-dimensional position is a relative distance and direction between the avatar and the video event.

4. The method of claim 1, wherein the detecting the video event utilizes external sensors or wherein the detecting the video event utilizes source code or detecting the video event comprises manually generating a start time, an end time and a three-dimensional position of the video event.

5. The method of claim 1, wherein collecting information comprising a position and orientation of the avatar including a facing direction and a head rotation.

6. The method of claim 5, wherein the position and orientation of the avatar is independent of an actual position and orientation of the user or wherein the position and orientation of the avatar is dependent on the actual position and orientation of the user.

7. The method of claim 1, wherein the first location of the first haptic output device and the second location of the second haptic output device include a determination of a placement on the user.

8. The method of claim 1, wherein the producing of the first haptic effect for the first haptic output device is different from the producing of the second haptic effect for the second haptic output device.

9. The method of claim 1, wherein the first haptic output device is different from the second haptic effect in terms of timing and intensity.

10. The method of claim 1, wherein the producing of the first and second haptic effect is modified due to a change in the position or orientation of the avatar.

11. The method of claim 1, where the video data is generated using Virtual Reality.

12. A computer readable medium having instructions stored thereon that, when executed by a processor, cause the processor to produce haptic effects, the producing comprising:
receiving video data comprising an avatar having an avatar position and orientation that corresponds to a user of the video data;
detecting a video event having a video position and event type within the video data;
determining a first location of a first haptic output device and a second location of a second haptic output device associated with the user; and
producing a first haptic effect with the first haptic output device and a second haptic effect with the second haptic output device based on the event type, first location and the second location, and the avatar position and orientation of the avatar in relationship to the video position.

13. The computer readable medium of claim 12, wherein the producing of the first and second haptic effect is modified due to a change in the position or orientation of the avatar.

14. A haptic effect generation system comprising:
an event detector configured to receive video data comprising an avatar having an avatar position and orientation that corresponds to a user of the video data and detect a video event having a video position and event type within the video data;
an actuator determinator configured to determine a first location of a first haptic output device and a second location of a second haptic output device associated with the user; and
a dynamic haptics generator configured to produce a first haptic effect with the first haptic output device and a second haptic effect with the second haptic output device based on the event type, first location and the second location, and the avatar position and orientation in relationship to the video position.

15. The system of claim 14, wherein the event detector is configured to determine a three-dimensional position of the video event and a relative distance and direction between the avatar and the video event.

16. The system of claim 14, wherein the dynamic haptics generator is configured to produce the first haptic effect for the first haptic output device that is different from the producing of the second haptic effect for the second haptic output device or wherein the dynamic haptics generator is configured to modify the first and second haptic effects due to a change in the position or orientation of the avatar.
